# EUROPEAN PATENT APPLICATION

(11) **EP 4 498 721 A1**
(43) Date of publication of application: **29.01.2025**
(21) Application number: 24190713.8
(22) Date of filing: 24.07.2024
(51) Int. Cl.: H04W 12/50, H04L 9/40, H04W 12/122, H04W 40/24, H04W 12/03, H04W 84/12

(54) **SYSTEMS FOR AND METHODS OF COMMUNICATION IN A NETWORK USING A PROBE MESSAGE**

(30) Priority: 27.07.2023 US 202318360466
(71) Applicant: Avago Technologies International Sales Pte. Limited, Singapore 768923 (SG)
(72) Inventor: Mohanram, Roopesh, Irvine, 92618 (US); Buhari, Nizamudeen Mohamed, Irvine, 92618 (US); Krishnapandi, Pandiyaraja, Irvine, 92618 (US); K, Mahesh Dutta H, Irvine, 92618 (US); Kulkami, Karthik Desh, Irvine, 92618 (US); Kumar, Sandeep, Irvine, 92618 (US)
(74) Representative: Dilg, Haeusler, Schindelmann Patentanwaltsgesellschaft mbH

(57) **Abstract**

Systems and methods use a protocol for a secure probe exchange Some embodiments relate to a first device (100). The first device (100) includes a circuit configured to provide at least one frame across a connection to a second device in response to an unprotected broadcast probe request message. The frame includes an unprotected unicast probe request message. An unprotected broadcast probe request message may refer to a broadcast message (e.g., a management frame) that requests a response and is not encrypted in some embodiments.

## Description

### Field of the Disclosure

This disclosure generally relates to systems for and methods of communication between an access point (AP) and a client device (e.g., a station (STA)) or between other communication devices. In some embodiments, this disclosure generally relates to systems and methods related to probe and/or probe response messages including but not limited to a secure probe exchange protocol.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA), etc. As higher data throughput and other changes develop, newer standards are constantly being developed for adoption, such as a progression from IEEE 802.11n to IEEE 802.11ac.

Establishing a connection between for communication between an access point (AP) and a client device (e.g., a station (STA)) or between other communication devices can involve a probe and/or a probe response message. The protocols for establishing a connection using a probe message (e.g., discovering, authenticating/deauthenticating and associating/disassociating connections) can contribute to communication overhead and can provide an opportunity for a security breach.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points (APs) in communication with one or more devices or stations (STAs), according to some embodiments.
FIGS. 1B and 1C are block diagrams depicting computing devices useful in connection with the methods and systems described herein, according to some embodiments.
FIG. 2A is a block diagram depicting a network including APs and STAs according to some embodiments.
FIG. 2B is a more detailed block diagram of an AP or STA in the network illustrated in FIG. 2A configured for a probe request/probe response operation according to some embodiments.
FIG. 3 is a flow diagram depicting a probe request operation involving an AP or STA illustrated in FIG. 2B according to some embodiments.
FIG. 4 is a flow diagram depicting a protected unicast probe request operation involving an AP or STA illustrated in FIG. 2B according to some embodiments.
FIG. 5 is a flow diagram depicting an unprotected unicast probe request operation involving an AP or STA illustrated in FIG. 2B according to some embodiments.
FIG. 6 is a flow diagram depicting a protected unicast probe request operation when the reestablishment of the connection between the AP and the STA due to reset/reboot without sending a disassociation request to the associated AP.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE 802.11be^{™}, IEEE P802.11n^{™}; IEEE P802.11ax^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of protocols for a probe request/response operations and methods and devices using such protocols.

Some embodiments disclosed herein are related to a protocol for secure probe request/response exchanges between a connected client and AP. In some embodiments, a protocol is provided for a WiFi network (e.g., IEEE 802.11 network, etc.), a cellular network, point to point communications, or combinations thereof. The protocol can be a used with a Wi-Fi AP to enhance connection security and reduce time to establish a connection in some embodiments. In some embodiments, a device that supports protected management frames and beacon protection capability utilizes the protocol. In some embodiments, systems and methods provide a secure probe request/response between the AP and STA that compliments beacon protection features (e.g., beacon protection features of the 802.11 standard). In some embodiments, systems and methods reestablish the connection between AP and STA in a secure fashion using the protocol, thereby reducing the connection time. In some embodiments, the AP is a beacon protection enabled AP, and the STA is beacon protection supported STA.

In some embodiments, the systems and methods avoid using unprotected individually addressed probe request frames and processing the unprotected probe response frame which can compromise or offset the protection mechanism introduced by beacon protection handling. In some embodiments, the systems and methods provide better security for unicast probe and/or response frames.

Some embodiments relate to a method. The method includes establishing a connection between a first device and a second device, and providing an unprotected broadcast probe request message across the connection from the first device to the second device. The method also includes receiving an unprotected unicast probe response message from the second device at the first device, wherein the first device is a beacon protection supported station device and the second device is a beacon protection enabled access point.

In some embodiments, the method also includes providing a protected unicast probe request message across the connection from the first device to the second device, and receiving a protected unicast probe response message from the second device at the first device. In some embodiments, the method also includes dropping an unprotected unicast probe response message at the first device for the protected unicast probe request message sent from the first device. In some embodiments, the method also includes providing an unprotected broadcast probe request message across the connection from the first device to the second device, and receiving an unprotected unicast probe response message from the second device at the first device.

In some embodiments, the method also includes receiving an unprotected unicast probe request message at the second device,. The method also includes providing a security association query request from the second device to first device to receive a security association query response and drop sending the unicast probe response message.

In some embodiments, the method also includes reseting/rebooting the first device without any disassociation request from the first device, re-establishing a connection between a first device and a second device after reset/reboot, providing an unprotected unicast probe request message across the connection from the first device to the second device. The method also includes initiating a secured association query request from the second device and upon timeout sending an unprotected unicast probe response message to first device, and receiving an unprotected unicast probe request message from the second device at the first device to continue the connection reestablishment. The first device is a beacon protection supported station device and the second device is a beacon protection enabled access point.

A connection may refer to communication instituted between nodes (such as a wireless communication between nodes) for exchanging data according to a protocol in some embodiments. In some embodiments, a connection is established using the three-way or four-way handshake mechanism (via discovery, authentication, and association operations) in some embodiments. A secure connection may refer to a connection that provides data in a format that cannot easily be obtained by another party in some embodiments. Various methods can establish a secure connection including but not limited to a data encryption method. In some embodiments, data encryption employs algorithms that encrypt and decrypt the information, including but not limited to: WPA and WPA2 operations under the 802.11 standard (e.g., temporal key integrity protocol (TKIP) and advanced encryption standard (AES)). The connection can be a wireless connection to or from a client device (e.g., a STA) and AP or can be between other types of communication devices. The wireless network can be an 802.11 WiFi network (e.g., IEEE 802.11be) in some embodiments. The client device or AP can be implemented in a device including one or more integrated circuits (ICs) packaged in an IC package. Connection reestablishment or reestablishing may refer reforming a connection after the connection has been disables, dis associated, deauthenticated or otherwise been down such ordinary communication ceases ot occur across the connection in some embodiments.

An authentication operation may refer to a procedure for how a client device gains access to the network. Authentication provides proof of identity to ensure the client device or user is allowed access to the network. An association operation may refer to a procedure for a client device or user that has been authenticated to become associated with an AP. Association allows the network to determine where to send data that is intended for a client device (e.g., data is sent through the AP with which the client device is associated). Generally, a client device is only associated with a single AP. A disassociation may refer to procedure where a client device is no longer associated with an AP in some embodiments. Disassociation prevents the AP from continuing to attempt to transmit data to the client device after the connection is cancelled in some embodiments. Disassociation generally involves the sending of a disassociation frame or message from the AP to the client device or from the client device to the AP in some embodiments. A disassociation request may refer to a message (e.g., a frame), that requests a disassociation operation in some embodiments A client device can be disassociated from an AP while still maintaining authentication on the network. A deauthentication may refer to a procedure that disallows any further service to be provided to a client device in some embodiments. Deauthentication generally involves the sending of a deauthentication frame or message from the AP to the client device or from the client device to the AP in some embodiments.

In some embodiments, the systems and methods reduce discovery operations (e.g., discovering the AP using scanning for beacon signals or probe requests). A discovery operation may refer to the communication of frames for discovering the availability and/or identification (ID) of an AP or other wireless device in some embodiments. Discovery operations may involve the communication of probe request frames and probe response frames.

Some embodiments relate to a first device. The first device includes a circuit configured to provide at least one frame across a connection to a second device in response to an unprotected broadcast probe request message. The frame includes an unprotected unicast probe request message.

An unprotected broadcast probe request message may refer to a broadcast message (e.g., a management frame) that requests a response and is not encrypted in some embodiments. The unprotected broadcast probe request message may request a response be sent including information about the capabilities of one or more service set identifications in a network and be provided without using key information provided during the four way handshake associated with a connection in some embodiments. An unprotected unicast probe response message may refer to a unicast message (e.g., a management frame) that provides a response to a request and is not encrypted in some embodiments. The unprotected unicast probe response message may include information about the capabilities of one or more service set identifications in a network and be provided without using key information provided during the four way handshake associated with a connection in some embodiments. The probe response is similar to a beacon frame including capability information, authentication information, etc. and is sent only in response to a probe request message in some embodiments.

An unprotected unicast probe request message may refer to a unicast message (e.g., a management frame) that requests a response and is not encrypted in some embodiments. A protected unicast probe request message may refer to may refer to a unicast message (e.g., a management frame) that requests a response and is encrypted or otherwise secured in some embodiments. A protected unicast probe response message may refer a unicast message (e.g., a management frame) that provides a response to a request and is encrypted or otherwise secured in some embodiments. A message may refer to data that is provided between a first device and a second device to convey a parameter, a command, a signal, or other data and may include or be in the form of a frame in some embodiments.

In some embodiments, the frame is provided according to an 802.11 protocol, and the connection is established by using an association or authentication operation. In some embodiments, the first device is a beacon protection enabled access point. A beacon protection enabled access point may refer to an access point that is capable of operating according to a beacon protection protocol in some embodiments. The beacon protection protocol can rely an AP to provide STAs with a beacon integrity key during security association setup and adds a message integrity check (MIC) element to beacon frames that covers all but the timestamp field of the beacon frame contents in some embodiments. A beacon protection supported station device may refer to STA or client device that is capable of operating according to a beacon protection protocol in some embodiments.

In some embodiments, the circuit is configured to provide a protected unicast probe request message across the connection to the second device in response to a protected unicast probe response message.

In some embodiments, the second device is a beacon protection supported station device. In some embodiments, the circuit is configured to provide a security association query request message in response to an unprotected unicast probe request message from another source.

A security association query request may refer message (e.g., a management frame) that requests a response and is encrypted or otherwise secured in some embodiments. A security association query response may refer message (e.g., a management frame) that responds to a security association query request and is encrypted or otherwise secured in some embodiments. The security association query request and security association query response may be provided according to the 802.11 standard.

In some embodiments, the circuit is configured to provide an unprotected unicast probe response message in response to expiration of a timeout period after the security association query request message is sent. A timeout period may refer to a period of time where a device waits for a response in some embodiments. After the time out period, the device may determine that the awaited response is not available.

In some embodiments, the circuit is configured to provide an unprotected unicast probe response message in response to expiration of a timeout period after a security association query request message is sent.

Some embodiments relate to a first device. The first device includes a circuit configured to provide at least one frame across a connection to a second device in response to a protected unicast probe request message. The frame includes a protected unicast probe response message.

In some embodiments, the frame is provided according to an 802.11 protocol, and the connection is established by using an association or authentication operation. The first device is a beacon protection enabled access point.

In some embodiments, the circuit is configured to provide an unprotected unicast probe response message across the connection to the second device in response to an unprotected broadcast probe request message. In some embodiments, the circuit is configured to provide a security association query request message in response to an unprotected unicast probe request message, and the circuit is configured to provide an unprotected unicast probe response message in response to expiration of a timeout period after the security association query request message is sent.

Some embodiments relate to a first device. The first device includes a circuit configured to provide at least one frame across a connection to a second device. The frame includes a protected unicast probe request message. The circuit is configured to drop an unprotected unicast message provided after a protected unicast probe response message is received from the second device in response to the protected unicast probe request message. Drop or dropping may refer to an operation where a message is not fully processed. The message may be discarded or ignored in some embodiments. In some embodiments, the first device is a beacon protection supported station device.

Some embodiments relate to a method. The method includes establishing a connection between a first device and a second device, providing an unprotected broadcast probe request message across the connection from the first device to the second device, and receiving an unprotected unicast probe request message from the second device at the first device. The first device is a beacon protection supported station device, and the second device is a beacon protection enabled access point.

In some embodiments, the method also includes providing a protected unicast probe request message across the connection from the first device to the second device and receiving a protected unicast probe response message from the second device at the first device. In some embodiments, the method also includes dropping an unprotected unicast probe response message at the first device after the protected unicast probe response message is received from the second device. In some embodiments, the method also includes providing a security association query response message across the connection from the first device to the second device in response to a security association query request message from the second device. In some embodiments, the method also includes receiving a security association query request message across the connection from the second device after sending an unprotected unicast probe request message after a reboot or refresh of the first device. A reboot or refresh or reset may refer to an operation that restarts, uses a boot program, performs an OFF/ON cycle, or resets a device without sending the disassociation request frame from the first device in some embodiments. In some embodiments, the method also includes receiving an unprotected unicast probe response message across the connection from the second device after a time out period for the security association query request message.

A frame may refer to a digital data transmission unit in some embodiments. For example, a frame may refer to a container for a single network packet. A data frame may refer to a frame that contains data in some embodiments. An encrypted frame may refer to a frame that has been encrypted in some embodiments. A broadcast message or broadcast frame may refer to a message or frame that is sent to more than one device in the basic service set (BSS) connected to or communicating with the AP in some embodiments. In some embodiments, the broadcast message or broadcast frame is sent to all the devices in the BSS connected to the AP. A unicast message or unicast frame may refer to a message or frame that has a single destination. In some embodiments, a management frame may refer to a frame for control or management operations including but not limited to beacon frames, probe request/response frames, authentication request/response frames, association request/response frames, deauthentication frames, disassociation requests (e.g., frames), etc.

### A. Computing and Network Environment

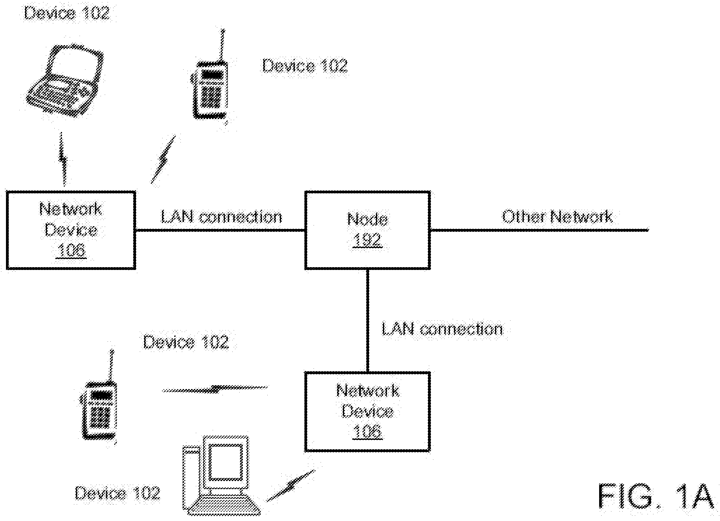

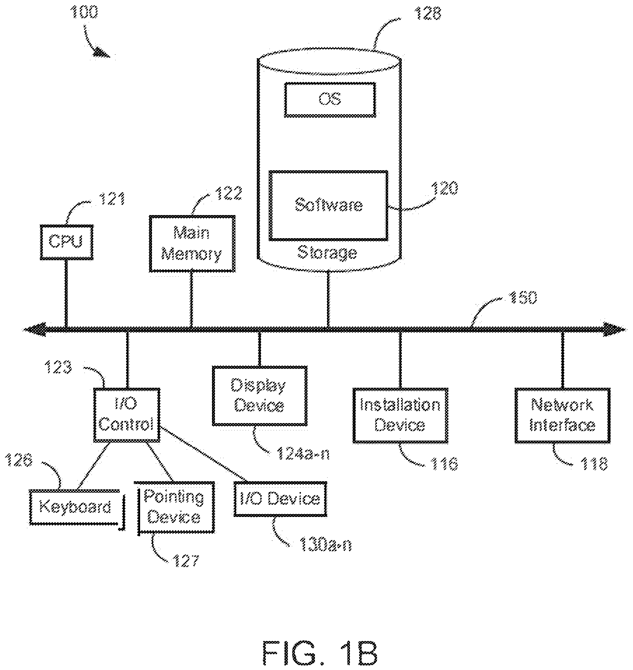

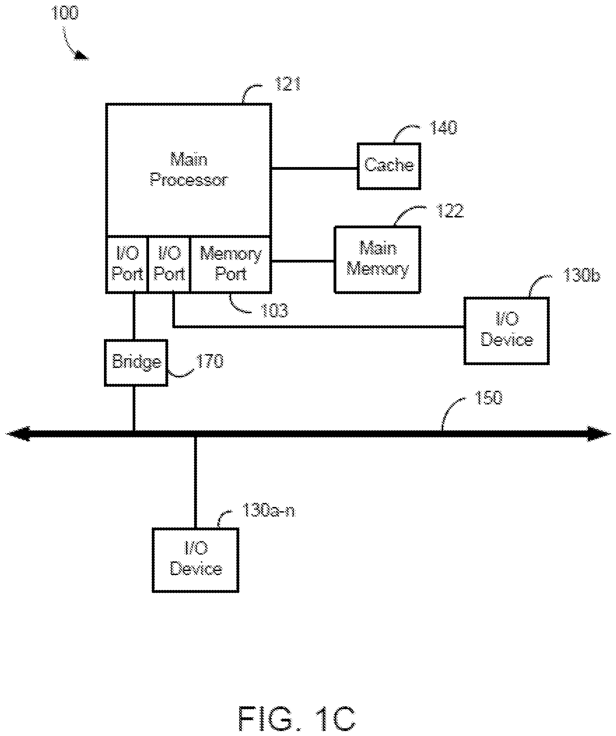

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Protocols for Probe/ Response Operations and Methods and Devices Using Such Protocols

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of probe/response operations for communications under the IEEE 802.11 standard are described herein, the systems and methods can be used with other networks (e.g., cellular and satellite networks) and in point to point communications.

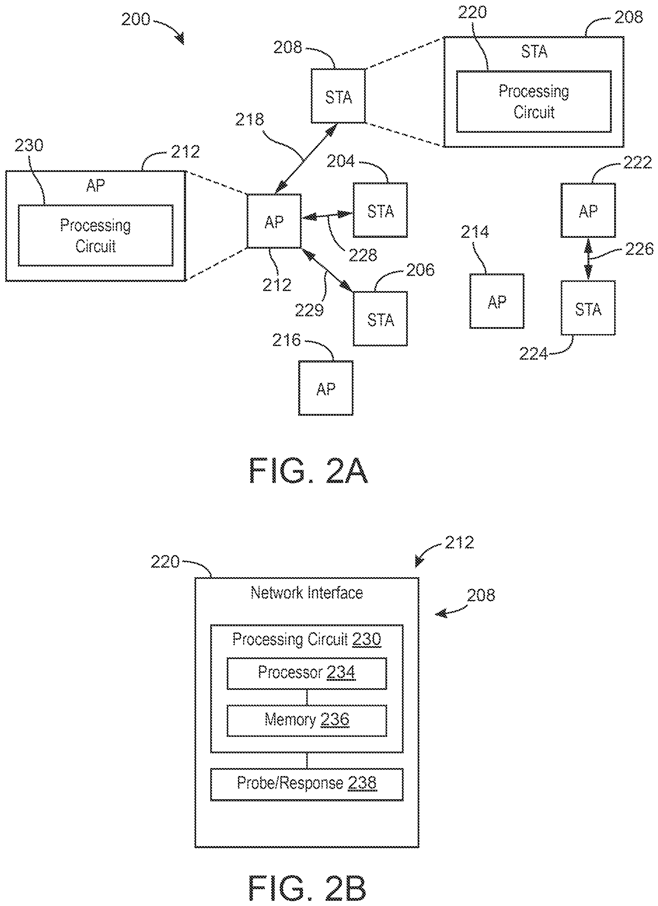

With reference to FIG. 2A, a wireless communication network or system 200 includes client devices or STAs 204, 206, 208, and 224 and APs 212, 214, 216, and 222. STAs 204, 206, 208, and 224 and APs 212, 214, 216, and 222 can be used in the systems discussed with reference to FIGS. 1A-C. Any number of STAs 204, 206, 208, and 224 and APs 212, 214, 216, and 222 can be used in the network or system 200. A STA or client device may refer to any device for communicating in communication system and includes but is not limited to a fixed, portable, or mobile laptop, desktop personal computer, personal digital assistant, workstation, wearable device, smart phone, or Wi-Fi phone in some embodiments. An access point or AP may refer to a device for communicatively coupling one or more non-AP devices (e.g., a client device or STA) to a network in some embodiments. An AP may enable non-AP devices to connect and communicate with a network in some embodiments. In some embodiments, an AP is a wireless access point (WAP) configured to enable wireless communication between non-AP devices. An AP includes but is not limited to a mobile, portable, or fixed hot spot, router, bridge, gNB node, eNodeB, evolved node B, or other communication device. An AP can provide services to a STA, such as, serving as a connection point to another network.

STAs 204, 206, 208, and 224 and APs 212, 214, 216, and 222 can each include a wireless transceiver and a various modules for communicating via connections. The modules can be software (e.g., firmware), hardware components, and combinations thereof. In some embodiments, each of STAs 204, 206, 208, and 224 and APs 212, 214, 216, and 222 includes an IEEE 802.11 conformant media access control (MAC) layer circuit and physical (PHY) layer interface to the wireless medium and can be part of a larger device or system. In some embodiments, each of STAs 204, 206, 208, and 224 and APs 212, 214, 216, and 222 operates according to other standards than the IEEE 802.11 standard.

A connection for wireless communication can be established between at least one of STAs 204, 206, 208, and 224 and APs 212, 214, 216, and 222 after authentication and association operations. For example, STA 208 has a connection 218 to AP 212. STAs 204, 206, 208, and 224 each include circuitry (e.g., a processor or processing circuit 221), and APs 212, 214, 216, and 226 each include circuitry (e.g., a processing circuit 233) for establishing and cancelling the connection 218 and communicating data across the connection. In another example, STA 204 has a connection 228 to AP 212, and STA 206 has a connection 229 to AP 222. STAs 204, 206, 208, and 224 each include circuitry (e.g., a processor or processing circuit 221), and APs 212, 214, 216, and 222 each include circuitry (e.g., a processing circuit 233) for operating according to probe and probe response operations as described below. The connections 218, 228, 229 and 226 are wireless connections formed using an association and/or authorization operation and cancelled using a disassociation and/or deauthentication operation in some embodiments. The connections 218, 228, 229 and 226 can be single link, multilink or dual link connections associated with APs 212 and 222 and can be a secure connection (e.g., using encryption) in some embodiments. In some embodiments, the connections 218, 228, 229 and 226 provide data communications and control and management communications on one or more channels in a 5G, 6G, 60G, or 2G band.

Referring to FIG. 2B, a device 220 is an AP 212 or STA 208 (FIG. 2A) and is configured for a secure probe request/response protocol according to some embodiments. In some embodiments, device 220 includes a processing circuit 233, and a probe request/response module 238. The term probe response module may refer to a module that processes the probe request message in some embodiments. The processing circuit 233 is any circuitry or components that can perform logic and communication processing operations and can include a processor 234 and a memory 236 in some embodiments.

In some embodiments, the processing circuit 230 is implemented as a field-programmable gate array, an application-specific integrated circuit, hardware, a software executing processor, or state machines. In some embodiments, the processing circuit 230 is part of layers (e.g., MAC, network, PHY layers) of IEEE 802.11 standard devices. The processing circuit 230 can be configured to perform communication operations, frame building and processing, probe request and response operations, discovery operations, association operations, authorization operations, connection setup, disassociation operations, handoff operations, and deauthentication operations in some embodiments. Instructions for the processing circuit 230 are stored in a non-transitory medium such as memory 236 in some embodiments. Processing circuit 221 of STA 208 and processing circuit 233 of AP 212 are similar to processing circuit 230 in some embodiments.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 236 may include database components, object code components, script components, or any other type of information structure for supporting the various activities and information structures described herein. Memory 236 may be communicably coupled to the processor 234 and include computer code or instructions for executing one or more processes described herein. The processor 234 may be implemented as one or more application specific integrated circuits (ASICs), field programmable gate arrays (FPGAs), a group of processing components, a software executing processor, state machines or other suitable electronic processing components. As such, AP, STA, or network device 106 (FIG. 1A) is configured to execute a variety of modules and/or programs and store associated data in a database of the memory 236. The modules (e.g., module 238) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, the probe/response module 238 is configured to provide or process a probe message or probe response message. For example, the probe/response module 238 is configured to cause device 220 provide a probe response message and/or probe response message for a secure exchange. In some embodiments, the probe/response module 238 is configured to cause device 220 provide a probe response message and/or probe response message for a secure exchange between AP 212 and STA 208 (FIG. 2A) that complements beacon protection and/or for reestablishing the connection between AP 212 and STA 208 (FIG. 2A) using less connection time. In some embodiments, probe/response module 238 is configured to implement a secure probe exchange (SPX) that is introduced through the management frame protection (MFP) for the individually addressed/unicast probe request message (e.g., frame) and unicast probe response message (e.g., frame). If the probe request/response frames are secured, the information present in the probe response frames are generally reliable and the non-AP STAs can consider updating the AP's capabilities based on the secured probe responses without a security loophole.

The discovery operation of the AP (e.g., AP 212) or the continuous presence of the AP is detected through a beacon message or probe request/probe response exchange. The beacon message is provided using beacon protection. The probe/response module 238 is configured to cause device 220 to provide secure probe request/response frames in a beacon protection enabled network by handling broadcast probe requests, handling protected unicast probe requests, handling unprotected unicast probe requests, establishing the connection between AP and STA with reduced the connection time, and handling unprotected unicast probe requests during directed association.

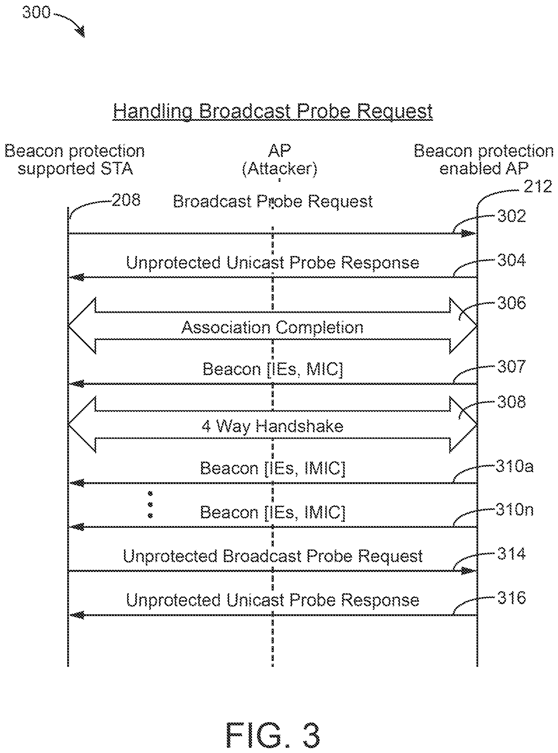

With reference to FIG. 3, the probe/response module 238 (FIG. 2B) handles a broadcast probe request/response operation between AP 212 and STA 208. STA 208 and AP 212 support beacon protection in some embodiments. STA 208 and AP 212 perform flow 300 to handle the broadcast probe request frame using a secure probe request/response protocol. STA 208 provides a broadcast probe request frame when active scan is issued at an operation 302. AP 212 with beacon protection enabled responds to the broadcast probe request frame by providing an unprotected (without management frame protection (MFP)) unicast probe response frame in an operation 304. In some embodiments, the unprotected probe response frame for the broadcast probe request frame is sent irrespective of whether the STA 208 is associated or unassociated with the AP 212. At an operation 306 association is completed. At an operation 307, AP 212 provides a beacon frame in an operation 307. The beacon frame includes an information element (IE) for a management message integrity code (MIC) or management MIC element (MME). A four way handshake is completed at an operation 308 and the connection between STA 208 and AP 212 is completed. Beacon frames can be provided using the MME after the connection is established in operations 310a-n. An unprotected broadcast probe request frame can be provided to AP 212 in an operation 314, and an unprotected unicast probe response frame can be provided to STA 208 in an operation 316 in response to the unprotected broadcast probe request frame. The unprotected unicast probe response frame in operation 316 is provided irrespective of whether STA 208 is associated or unassociated with AP 212.

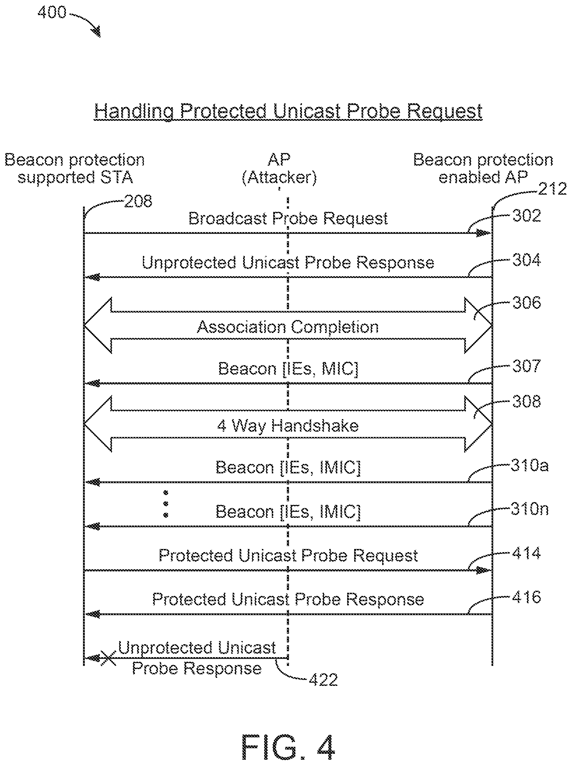

With reference to FIG. 4, the probe/response module 238 (FIG. 2B) handles a unicast probe request/response operation between AP 212 and STA 208. STA 208 and AP 212 support beacon protection in some embodiments. The unicast probe request/response operation between AP 212 and STA 208 is handled using protected individually addressed/unicast probe request to ensure the integrity of the association between a beacon protection enabled AP and a beacon protection supported STA in some embodiments. STA 208 and AP 212 perform flow 400 to handle the unicast probe request frame using secure probe request/response protocol in some embodiments.

STA 208 provides a broadcast probe request frame when active scan is issued at an operation 302 and uses operations 304, 306, 307 and 308 described with reference to flow 300 (FiG. 3) to establish a connection. Beacon frames can be provided using the MME after the connection is established in operations 310a-n.

A protected unicast probe request frame can be provided to AP 212 in an operation 414, and a protected unicast probe response frame can be provided to STA 208 in an operation 416. An unprotected unicast probe response frame received by STA 208 is dropped if there is any unprotected probe response for the corresponding protected probe request in an operation 422. STA 208, which supports the beacon protection feature, sends individually
addressed protected probe request frames to the associated beacon protection enabled AP (e.g., AP 212) in operation 414 in some embodiments. AP 212 sends the protected probe response to the STA 208 for the corresponding unicast protected probe request frame in operation 416 in some embodiments.

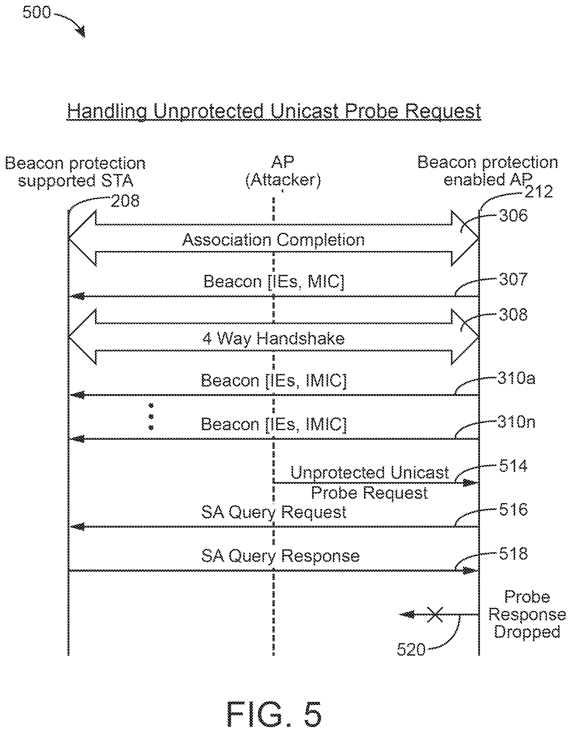

With reference to FIG. 5, the probe/response module 238 (FIG. 2B) handles an unprotected unicast probe request/response operation between AP 212 and STA 208. STA 208 and AP 212 support beacon protection in some embodiments. The unicast probe request/response operation between AP 212 and STA 208 is handled using unprotected individually addressed/unicast probe request to ensure the integrity of the association between the beacon protection enabled AP and beacon protection supported STA in some embodiments. STA 208 and AP 212 perform flow 500 to handle the unprotected unicast probe request frame using secure probe request/response protocol in some embodiments.

STA 208 provides a broadcast probe request frame when active scan is issued at operation 302 and uses operations 304, 306, 307 and 308 described with reference to flow 300 (FiG. 3) to establish a connection. Beacon frames can be provided using the MME after the connection is established in operations 310a-n.

An unprotected unicast probe request frame is provided from a source (e.g., an attacker) to AP 212 in an operation 514 in some embodiments. STA 208 provides a security association (SA) query request frame in an operation 516 in response to the unprotected unicast probe request frame sent in operation 514 to ensure STA 208 is associated securely. AP 212 provides an SA query response frame in an operation 518 in response to the SA query request frame sent in operation 516 to ensure STA 208 is associated securely. On reception of SA Query response from the STA 208, AP 212 drops the unprotected probe request from operation 514 because the STA 208 has the proper key information to send a protected unicast probe request. The unprotected probe request frame from operation 514 is dropped because AP 212 has determined that the unprotected probe request frame from operation 514 is not from a legitimate beacon protection supported associated STA.

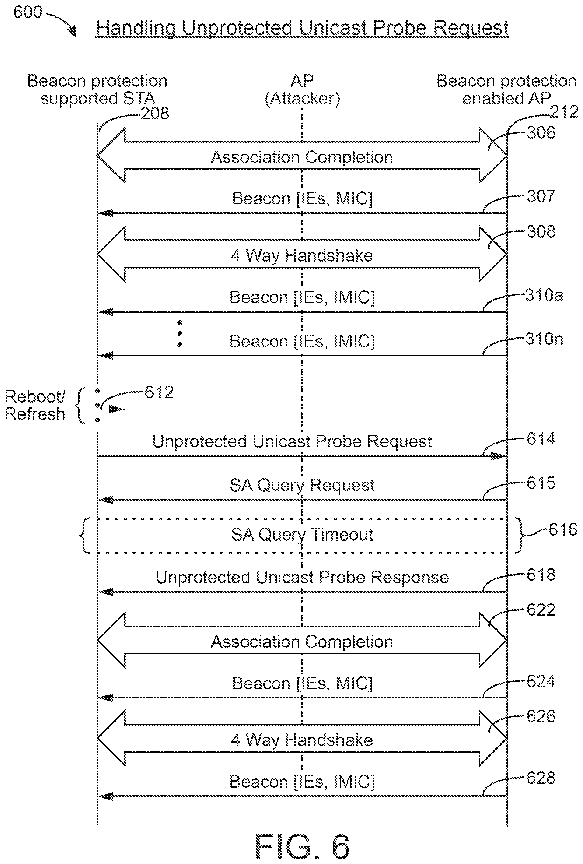

With reference to FIG. 6, the probe/response module 238 (FIG. 2B) handles reestablishing the connection between AP 212 and STA 208. The connection is established using directed association in some embodiments. STA 208 and AP 212 perform flow 500 to handle unprotected individually addressed/unicast probe request to handle association with STA 208 after a fresh reboot/refresh in some embodiments.

At operation 306 association is completed. At an operation 307, AP 212 provides a beacon frame in operation 307. The beacon from includes an information element (IE) for a management message integrity code (MIC) or management MIC element (MME). A four way handshake is completed at operation 308 and the connection between STA 208 and AP 212 is completed. Beacon frames can be provided using the MME after the connection is established in operations 310a-n.

A reboot or refresh is provided at an operation 612. A reboot or refresh of a wifi interface of a beacon protection supported STA 208 can cause the key information which was exchanged to be invalid after reboot/refresh in some embodiments. AP 212 still holds the information with the old key value of STA 208 in some embodiments. A new association request directed from STA 208 specifically to associate to a previously associated AP (e.g., AP 212) can be refused by the AP as the STA information is already present. The association can get delayed until a lifetime interval expires at AP side to clean up the old associated STA information. In some embodiments, this delay is advantageously reduced by following flow 600 to overcome the delay in reestablishing the new connection when the AP 212 is unaware of a reboot or refresh of STA 208 and still holds the old security key exchange values associated with STA 208.

An unprotected broadcast probe request frame is provided from STA 208 to AP 212 in an operation 614 in some embodiments. AP 212 provides an SA query request frame in an operation 615 in response to the unprotected unicast probe request frame sent in operation 614 to ensure STA 208 is associated securely. The unprotected unicast probe request sent from an associated STA 208 triggers the SA query request frame from AP 212 in some embodiments.

An SA query response timeout occurs in an operation 616 after the SA query request frame sent in operation 616. The SA query timeout occurs because the STA 208 does not have the proper key information to respond to the SA query response frame. After the timeout expires at AP end, AP 212 clears the previous association information associated with STA 208 and sends an unprotected probe response frame to establish a fresh association in an operation 618 to STA 208. On reception of the probe response frame from AP 212, STA 208 continues the (re)association process. Using flow 600, the AP and STA association happens more quickly without requiring refusal of the association request from the STA 208.

Association or reassociation is complete in an operation 622. A four way handshake is completed at operation 626 and the connection or reconnection between STA 208 and AP 212 is completed. Beacon frames can be provided using the MME after the connection is established in operation 628.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beam formers and/or beam formees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g., using the phrase "on a single circuit", "on the set of circuits comprising" or "on a single device").

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and sub bands discussed above are exemplary. The present methods and systems should therefore not be limited by the above described embodiments, methods, and examples, but by all embodiments and methods within the scope and spirit of the disclosure.

## Claims

1. A first device (100), comprising:
a circuit configured to provide at least one frame across a connection to a second device in response to an unprotected broadcast probe request message, the frame comprises an unprotected unicast probe request message.

2. The first device (100) of claim 1, wherein the frame is provided according to an 802.11 protocol and the connection is established by using an association or authentication operation.

3. The first device (100) of claim 1, comprising a least one of the following features:
wherein the first device (100) is a beacon protection enabled access point;
wherein the circuit is configured to provide a protected unicast probe request message across the connection to the second device in response to a protected unicast probe response message;
wherein the second device is a beacon protection supported station device.

4. The first device (100) of any of claims 1 to 3, wherein the circuit is configured to provide a security association query request message in response to an unprotected unicast probe request message from another source.

5. The first device (100) of claim 4, wherein the circuit is configured to provide an unprotected unicast probe response message in response to expiration of a timeout period after the security association query request message is sent.

6. The first device (100) of any of claims 1 to 5, wherein the circuit is configured to provide an unprotected unicast probe response message in response to expiration of a timeout period after a security association query request message is sent.

7. A first device (100), comprising:
a circuit configured to provide at least one frame across a connection to a second device in response to a protected unicast probe request message, the frame comprises a protected unicast probe response message.

8. The first device (100) of claim 7, wherein the frame is provided according to an 802.11 protocol and the connection is established by using an association or authentication operation and wherein the first device (100) is a beacon protection enabled access point.

9. The first device (100) of claim 8, comprising a least one of the following features:
wherein the circuit is configured to provide an unprotected unicast probe response message across the connection to the second device in response to an unprotected broadcast probe request message;
wherein the circuit is configured to provide a security association query request message in response to an unprotected unicast probe request message, and wherein the circuit is configured to provide an unprotected unicast probe response message in response to expiration of a timeout period after the security association query request message is sent.

10. A first device (100), comprising:
a circuit configured to provide at least one frame across a connection to a second device, the frame comprises a protected unicast probe request message, wherein the circuit is configured to drop an unprotected unicast message provided after a protected unicast probe response message is received from the second device in response to the protected unicast probe request message.

11. The first device (100) of claim 10, wherein the first device (100) is a beacon protection supported station device.

12. A method, comprising:
establishing a connection between a first device (100) and a second device;
providing an unprotected broadcast probe request message across the connection from the first device (100) to the second device; and
receiving an unprotected unicast probe response message from the second device at the first device, wherein the first device (100) is a beacon protection supported station device and the second device is a beacon protection enabled access point.

13. The method of claim 12, further comprising:
providing a protected unicast probe request message across the connection from the first device (100) to the second device; and
receiving a protected unicast probe response message from the second device at the first device (100).

14. The method of claim 13, further comprising:
dropping an unprotected unicast probe response message at the first device (100) for the protected unicast probe request message sent from the first device (100).

15. The method of any of claims 12 to 14, comprising a least one of the following features:
further comprising:
providing an unprotected broadcast probe request message across the connection from the first device (100) to the second device; and
receiving an unprotected unicast probe response message from the second device at the first device (100);
further comprising:
receiving an unprotected unicast probe request message at the second device providing a security association query request from the second device to first device (100) to receive a security association query response and drop sending the unicast probe response message;
further comprising:
resetting/rebooting/refreshing the first device (100) without any disassociation request from the first device (100);
re-establishing a connection between a first device (100) and a second device after reset/reboot/refresh;
providing an unprotected unicast probe request message across the connection from the first device (100) to the second device; and
initiating a secured association query request from the second device and upon timeout sending an unprotected unicast probe response message to first device (100); and
receiving an unprotected unicast probe request message from the second device at the first device (100), to continue the connection reestablishment, wherein the first device (100) is a beacon protection supported station device and the second device is a beacon protection enabled access point.
